Europäisches Patentamt

European Patent Office

Office européen des brevets

(19)

(11) Veröffentlichungsnummer: **0 007 430**
**B1**

(12) **EUROPÄISCHE PATENTSCHRIFT**

(45) Veröffentlichungstag der Patentschrift:
26.08.81

(51) Int. Cl.³: **F 16 C 11/08**

(21) Anmeldenummer: **79101997.9**

(22) Anmeldetag: **18.06.79**

(54) **Elastisches Kugelgelenk mit einem gegenüber einem metallischen Gehäuse kardanisch und drehbar beweglichen Kugelzapfen.**

(30) Priorität: **18.07.78 DE 2831470**

(43) Veröffentlichungstag der Anmeldung:
**06.02.80 Patentblatt 80/3**

(45) Bekanntmachung des Hinweises auf die Patenterteilung:
**26.08.81 Patentblatt 81/34**

(84) Benannte Vertragsstaaten:
**BE FR GB IT NL SE**

(56) Entgegenhaltungen:
**DE-A-1 911 063**
**DE-B-1 525 062**
**US-A-3 117 810**

(73) Patentinhaber: **Boge GmbH, Bogestrasse 50,
D-5208 Eitorf/Sieg (DE)**

(72) Erfinder: **Honcamp, Günther, Dipl.-Ing.,
Schützenstrasse 126, D-5483 Bad Neuenahr/Ahrweiler
(DE)**
Erfinder: **Brenner, Heinz, Ing.-grad., Am Thurmberg 1,
D-5483 Bad Neuenahr/Ahrweiler (DE)**
Erfinder: **Hüsch, Bruno, Himmelsbergerstrasse 159,
D-5483 Bad Neuenahr/Ahrweiler (DE)**

# Elastisches Kugelgelenk mit einem gegenüber einem metallischen Gehäuse kardanisch und drehbar beweglichen Kugelzapfen

Die Erfindung bezieht sich auf ein elastisches Kugelgelenk mit einem gegenüber einem metallischen Gehäuse kardanisch und drehbar beweglichen Kugelzapfen, das in einem Vorzustand als ein Gummimetallteil mit einem ringförmigen Gummikörper ausgebildet ist, der innenseits mit einem den Kugelzapfen bildenden Innenteil und aussenseits mit einem zylindrischen Mittelabschnitt eines beiderseits des Mittelabschnitts freie Rohrenden aufweisenden Gehäuses haftend verbunden ist, wobei im Fertigzustand das Gehäuse auf einen kleineren Durchmesser reduziert ist und die Rohrenden nach innen umgebördelt sind.

Bei Kugelgelenken dieser Art, die vorzugsweise im Fahrzeugbau verwendet werden, kann der Gummikörper durch das Reduzieren des Gehäuses unter eine Druckvorspannung gesetzt und durch die umgebördelten Rohrenden in axialer Richtung verspannt werden. Durch die erste Massnahme sind eine höhere radiale Belastbarkeit und durch die zweite Massnahme eine höhere axiale Belastbarkeit gegenüber einem Kugelgelenk erreichbar, bei dem eine Druckvorspannung und eine axiale Verspannung nicht vorliegen. Beim Reduzieren des Gehäuses erfolgt eine Schubspannungen hervorrufende Verschiebung von Materialteilen des Gummikörpers in axialer Richtung. Die Haftung des Gummikörpers am Kugelzapfen und am Gehäuse erhöht den bis zu einem Rutschen des gesamten Gummikörpers oder von Teilen desselben gegenüber dem Kugelzapfen oder dem Gehäuse möglichen Drehwinkel und zugleich das maximal übertragbare Drehmoment des Kugelgelenks.

Bei dem aus dem DE-U 1 937 541 bekannten Kugelgelenk der genannten Art liegen die umbördelten Rohrenden unmittelbar am Gummikörper an und ist der Gummikörper ausschliesslich mit dem Mittelabschnitt des Gehäuses haftend verbunden, nicht jedoch im Bereich der umbördelten Rohrenden. Grössere Drehwinkel, bei denen die Haftung im Mittelabschnitt noch voll gewährleistet ist, können im Bereich der Rohrenden ein Rutschen des Gummikörpers gegenüber dem Gehäuse und dadurch in nachteiliger Weise einen die Lebensdauer des Kugelgelenks verringernden Verschleiss verursachen. Der gehaftete Mittelabschnitt ist verhältnismässig lang ausgeführt. Wenn zur Erzielung einer grossen Druckvorspannung des Gummikörpers das Gehäuse stark reduziert wird, kann in weiterhin nachteiliger Weise eine Verschiebung von Materialteilen des Gummikörpers in axialer Richtung in so hohem Masse erfolgen, dass durch die hervorgerufenen Schubspannungen partielle Ablösungen des Gummikörpers im gehafteten Mittelabschnitt eintreten.

Die Erfindung befasst sich mit der Aufgabe, ein Kugelgelenk der eingangs genannten Art zu schaffen, bei dem die Möglichkeit eines Rutschens des Gummikörpers in nicht gehafteten Bereichen und eine Ablösung in gehafteten Bereichen auch bei grossen Drehwinkeln weitgehendst ausgeschaltet ist. Diese Aufgabe wird erfindungsgemäss dadurch gelöst, dass der Gummikörper im Vorzustand des Gummi-Metall-Teils beiderseits des Mittelabschnitts radial zurückstehende Bereiche mit freier Oberfläche aufweist, anschliessend an diese Bereiche von den Rohrenden überragte, kugelzonenartige, metallische Endstücke von kleinerem Aussendurchmesser als dem lichten Durchmesser der Rohrenden mit dem Gummikörper haftend verbunden sind und im Fertigzustand die umgebördelten Rohrenden die Endstücke drehfest mit dem Gehäuse verbinden, wobei das Gehäuse zusammen mit den Rohrenden so weit auf einen kleineren Durchmesser reduziert ist, dass die Rohrenden hinsichtlich des Innendurchmessers dem Aussendurchmesser der Endstücke entsprechen.

Durch die Massnahmen sind die Endstücke im Fertigzustand ein Teil des Gehäuses und den nicht gehafteten radial zurückstehenden Bereichen des Gummikörpers mit freier Oberfläche sind jeweils links und rechts gehaftete Bereiche des Gehäuses benachbart, auf der einen Seite die gehafteten Bereiche des Mittelabschnitts und auf der anderen Seite die der Endstücke. Beim Verdrehen des Kugelzapfens gegenüber dem Gehäuse werden in vorteilhafter Weise die nicht gehafteten Bereiche des Gummikörpers von den gehafteten Bereichen mitgenommen und dadurch ist die Grenze eines Rutschens des Gummikörpers gegenüber dem Gehäuse heraufgesetzt. In weiterhin vorteilhafter Weise ist die Grenze einer Ablösung des Gummikörpers im gehafteten Mittelbereich durch die oben erwähnten Schubspannungen beim Reduzieren des Gehäuses herabgesetzt, da die Verschiebung von Materialteilen des Gummikörpers in axialer Richtung eingeschränkt ist, indem der gehaftete Mittelabschnitt verhältnismässig kurz ausgeführt werden kann und die im Vorzustand nicht mit dem Gehäuse verbundenen Endstücke beim Reduzieren des Gehäuses in axialer Richtung nachgeben können, wenn das Gehäuse stark reduziert wird.

Zweckmässig werden die Endstücke an ihrem Aussendurchmesser mit Ausnehmungen versehen, in die im Fertigzustand die umgebördelten Rohrenden partiell eingreifen. An diese Ausnehmungen können sich Ausnehmungen des Gummikörpers in axialer Richtung zum Mittelabschnitt anschliessen, wobei das beim Reduzieren des Gehäuses verdrängte Material des Gummikörpers in die durch die Ausnehmungen geschaffenen Hohlräume ausweichen kann. Zum gleichen Zweck kann der radial zurückstehende Bereich des Gummikörpers einen kleineren Durchmesser aufweisen, als dem Aussendurchmesser der Endstücke entspricht, was sich jedoch wegen der dadurch bedingten Unterschneidung formtechnisch schwieriger verwirklichen lässt als die erstgenannte Möglichkeit der Ausnehmungen.

Weitere Einzelheiten der Erfindung werden anhand der Zeichnung erläutert, auf der Ausführungsbeispiele von Kugelgelenken nach der Erfindung dargestellt sind. Auf der Zeichnung zeigen:

Fig. 1 einen Längsschnitt eines Kugelgelenks mit einem durchgehenden Innenteil in einem Vorzustand,

Fig. 2 eine Seitenansicht des Kugelgelenks nach Fig. 1,

Fig. 3 einen Längsschnitt des Kugelgelenks nach Fig. 1 im Fertigzustand und

Fig. 4 einen Längsschnitt eines Kugelgelenks mit einem einseitigen Kugelzapfen, wobei die obere Seite der Figur einen Vorzustand und die untere Seite den Fertigzustand zeigen.

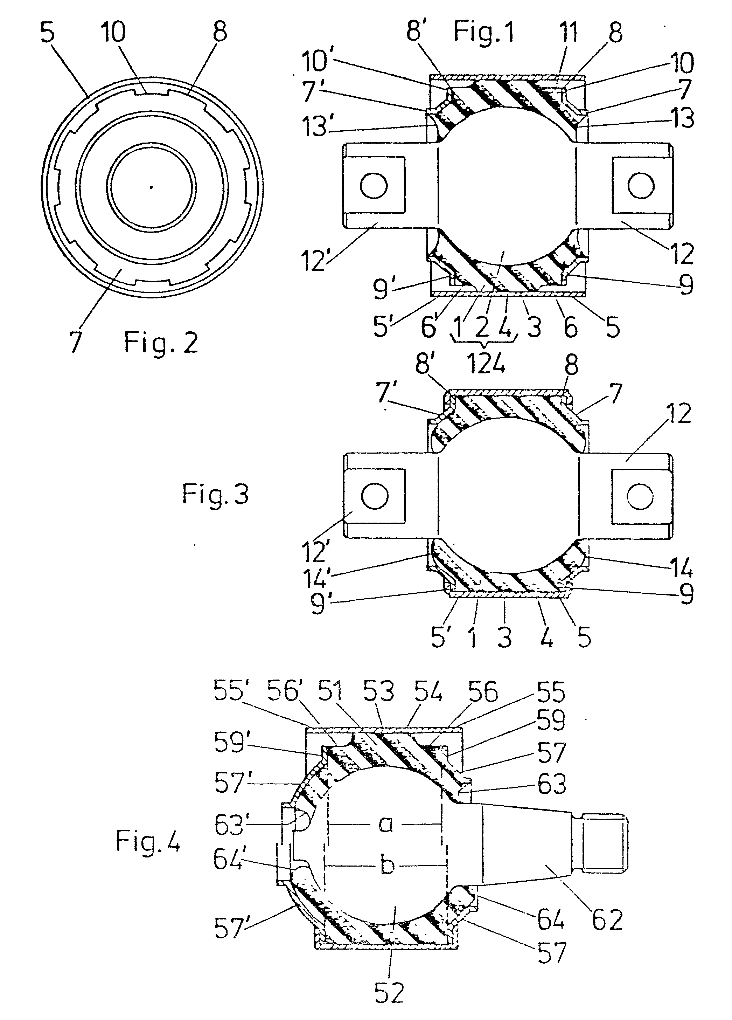

Das Kugelgelenk nach den Fig. 1 und 2 ist als ein Gummimetallteil 124 mit einem Gummikörper 1 ausgebildet, der innenseits mit einem zwei zylindrische Befestigungsenden 12 und 12' aufweisenden, kugeligen Innenteil 2 und aussenseits mit einem zylindrischen Mittelabschnitt 3 eines Gehäuses 4 haftend verbunden ist. Das Gehäuse 4 ist beiderseits des Mittelabschnitts 3 mit freien Rohrenden 5 und 5' versehen. Der Gummikörper 1 weist beiderseits des Mittelabschnitts 3 radial zurückstehende, aussenzylindrische Bereiche 6 und 6' mit freier Gummioberfläche auf. An die Bereiche 6 und 6' anschliessend sind aus einem Blech gedrückte, kugelzonenartige Endstücke 7 und 7' mit dem Gummikörper 1 haftend verbunden. Die Endstücke 7 und 7'werden von den Rohrenden 5 und 5' überragt. Ihre Aussendurchmesser 8 und 8' sind kleiner als die lichten Durchmesser der Rohrenden 5 und 5' und gleich den Aussendurchmessern der Bereiche 6 und 6'. Die Endstücke 7 und 7' sind innerhalb der Rohrenden 5 und 5' mit nach aussen weisenden Schultern 9 und 9' versehen, die am Umfang Ausnehmungen 10 und 10' aufweisen.

Gestrichelt angedeutete, zum Mittelabschnitt 3 gerichtete Ausnehmungen 11 können sich an die Ausnehmungen 10 und 10' anschliessen. Die stirnseitigen Enden 13 und 13' des Gummikörpes 1 sind nach innen ausgekehlt.

Im Fertigzustand nach Fig. 3 sind der Mittelabschnitt 3 und die Rohrenden 5 und 5' hinsichtlich ihres Innendurchmessers beispielsweise durch einen Kalibriervorgang bis auf die Aussendurchmesser 8 und 8' der Endstücke 7 und 7' reduziert, wodurch der Gummikörper 1 unter eine Druckvorspannung gesetzt wird. Die über die Schultern 9 und 9' hinausstehenden Teile der Rohrenden 5 und 5' sind bis zur Anlage an den Schultern 9 und 9' umgebördelt und verspannen die Endstücke 7 und 7' axial gegeneinander, nachdem diese in einer Vorrichtung in eine entsprechende Lage gebracht waren. Durch das axiale Verspannen sind die stirnseitigen Enden 14 und 14' des Gummikörpers 1 nach aussen vorgewölbt. Bei dem Bördelvorgang werden Teile der Rohrenden 5 und 5' in die Ausnehmungen 10 und 10' gedrückt, und dadurch sind die Endstücke 7 und 7' gegenüber dem Gehäuse 4 gegen Verdrehung gesichert. Das durch das Reduzieren des Gehäuses 4 verdrängte Material des Gummikörpers 1 ist in die Ausnehmungen 11 zu den stirnseitigen Enden 14 und 14' ausgewichen, wobei sich der axiale Abstand der Endstücke 7 und 7' gegenüber dem Abstand im Vorzustand im Sinne einer Vergrösserung oder einer Verkleinerung geändert haben kann.

Das fertige Kugelgelenk ist für eine gelenkige Verbindung von zwei Maschinenelementen, z.B. eines Fahrzeugrahmens und eines gegabelten Schwinghebels verwendbar, wobei das Gehäuse 4 beispielsweise mit Presssitz in eine entsprechende Bohrung des Schwinghebels eingepresst ist und die Befestigungsenden 12 und 12' in geeigneter Weise mit dem Fahrzeugrahmen verbunden sind.

Das Kugelgelenk nach Fig. 4 besteht aus einem Gummikörper 51 mit einem Mittelabschnitt 53, radial zurückstehenden Bereichen 56 und 56' und Endstücken 57 und 57', aus einem einseitigen, mit einem konischen Befestigungsende 62 versehenen Kugelzapfen 52 und aus einem Gehäuse 54 mit Rohrenden 55 und 55'. Die Endstücke 57 und 57' weisen Schultern 59 und 59' auf und sind voneinander verschieden. Das dem Befestigungsende 62 abgewandte Endstück 57' hat einen kleineren Innendurchmesser als das andere Endstück 57. Dadurch ist die axiale Belastbarkeit des Kugelzapfens 52 in Druckrichtung erhöht. Das Gehäuse 54 ist im Fertigzustand stark reduziert, und der Abstand b der Endstücke 57 und 57' ist im Fertigzustand grösser als der Abstand a im Vorzustand. Das beim Reduzieren des Gehäuss 54 verdrängte Material des Gummikörpers 51 ist in Richtung auf die Endstücke 57 und 57' ausgewichen. Die Endstücke 57 und 57' sind axial gegeneinander verspannt, wobei die im Vorzustand ausgekehlten stirnseitigen Enden 63 und 63' zu vorgewölbten Enden 64 und 64' geworden sind.

Der Rahmen der Erfindung wird nicht verlassen, wenn die Form des Innenteils von einer exakten Kugel abweicht und das Innenteil beispielsweise eiförmig oder ein anderer Rotationskörper mit einer beliebigen, auch einer polygonalen Erzeugenden ist.

**Patentansprüche**

1. Elastisches Kugelgelenk mit einem gegenüber einem metallischen Gehäuse (4; 54) kardanisch und drehbar beweglichen Kugelzapfen, das in einem Vorzustand als Gummi-Metall-Teil (124; 51, 52, 54) mit einem ringförmigen Gummikörper (1; 51) ausgebildet ist, der innenseits mit einem den Kugelzapfen bildenden Innenteil (2; 52) und aussenseits mit einem zylindrischen Mittelabschnitt (3; 53) eines beiderseits des Mittelabschnitts (3; 53) freie Rohrenden (5, 5'; 55, 55') aufweisenden Gehäuses (4; 54) haftend verbunden ist, wobei im Fertigzustand das Gehäuse (4; 54) auf einen kleineren Rohrdurchmesser reduziert ist und die Rohrenden (5, 5'; 55, 55') nach innen umgebördelt sind, dadurch gekennzeichnet, dass der Gummikörper (1, 51) im Vorzustand des Gummi-Metall-Teils (124; 51, 52, 54) beiderseits des Mittelabschnitts (3; 53) radial zurückstehende Bereiche (6, 6'; 56, 56') mit freier Oberfläche aufweist, anschliessend an diese Bereiche (6, 6'; 56, 56') von den Rohrenden (5, 5'; 55, 55') überragte, kugelzonenartige, metallische Endstücke (7, 7'; 57, 57') von kleinerem Aussendurchmesser (8, 8') als dem lichten Durchmesser der Rohrenden (5, 5'; 55, 55') mit dem Gummikörper (1; 51) haftend verbunden sind und im Fertigzustand die umgebördelten Rohrenden (5, 5'; 55, 55') die Endstücke (7, 7'; 57, 57') drehfest mit dem Gehäuse (4; 54) verbinden, wobei das Gehäuse (4; 54) zusammen mit den Rohrenden (5, 5'; 55, 55') so weit auf einen kleineren Durchmesser reduziert ist, dass die Rohrenden (5, 5'; 55, 55') hinsichtlich des Innendurchmessers dem Aussendurchmesser der Endstücke (7, 7'; 57, 57') entsprechen.

2. Kugelgelenk nach Anspruch 1, dadurch gekennzeichnet, dass die Endstücke (7, 7') an ihrem Aussendurchmesser (8, 8') mit Ausnehmungen (10, 10') versehen sind, in die im Fertigzustand die umgebördelten Rohrenden (5, 5') partiell eingreifen.

3. Kugelgelenk nach Anspruch 2, dadurch gekennzeichnet, dass sich Ausnehmungen (11) des Gummikörpers (1) in axialer Richtung zum Mittelabschnitt (3) an die Ausnehmungen (10) der Endstücke (7) anschliessen.

## Revendications

1. Joint élastique à articulation sphérique comportant un axe sphérique qui peut se déplacer à la façon d'un cardan et par rotation par rapport à un carter métallique (4; 54) et qui est conçu, à l'état ébauché, comme pièce caoutchouc-métal (124; 51, 52, 54) avec un corps (1; 51) de caoutchouc de forme annulaire relié par adhérence, à l'intérieur à une pièce interne (2; 52) formant l'axe sphérique et, à l'extérieur, à une portion cylindrique médiane (3; 53) d'un carter (4; 54) qui présente des deux côtés de la portion médiane (3; 53) des extrémités tubulaires libres (5, 5'; 55, 55'), le carter (4; 54) étant, à l'état fini, réduit à un diamètre tubulaire plus faible et les extrémités tubulaires (5, 5'; 55, 55') étant, à ce même état, rabattues vers l'intérieur, caractérisé en ce que le corps de caoutchouc (1, 51), en l'état ébauché de la pièce caoutchouc-métal (124; 51, 52, 54), présente, des deux côtés de la portion médiane (3; 53) des zones (6, 6'; 56, 56') à surface libre en retrait, vu dans le sens radial; en ce que, à la suite de ces zones (6, 6'; 56, 56'), des pièces métalliques d'extrémité (7, 7'; 57, 57'), en forme de secteur sphérique, que débordent les extrémités tubulaires (5, 5'; 55, 55') et dont le diamètre extérieur (8, 8') est inférieur au diamètre de passage des extrémités tubulaires (5, 5'; 55, 55') sont reliées par adhérence au corps de caoutchouc (1; 51); et en ce qu'en l'état fini, les extrémités tubulaires rabattues (5, 5'; 55, 55') relient, sans possibilité de rotation relative, les pièces d'extrémité (7, 7'; 57, 57') au carter (4; 54), ce carter (4; 54) avec ses extrémités tubulaires (5, 5'; 55, 55') étant réduit à un diamètre suffisamment faible pour que le diamètre intérieur des extrémités tubulaires (5, 5'; 55, 55') corresponde au diamètre extérieur des pièces d'extrémité (7, 7'; 57, 57').

2. Joint à articulation sphérique selon la revendication 1, caractérisé en ce que les pièces d'extrémité (7, 7') comportent sur leurs diamètres extérieurs (8, 8') des évidements (10, 10') dans lesquels se logent partiellement, en l'état fini, les extrémités tubulaires rabattues (5, 5').

3. Joint à articulation sphérique selon la revendication 2, caractérisé en ce que des évidements (11) du corps de caoutchouc (1), situés dans la direction axiale de la portion médiane (3), se raccordent aux évidements (10) des pièces d'extrémité (7).

## Claims

1. Flexible ball joint with a ball pin which is movable in swivelling and rotating modes with respect to a metallic housing (4; 54), initially in the form of a rubber/metal component (124; 51, 52, 54) with an annular rubber body (1; 51) which is bonded internally to an inner component (2; 52) forming the ball pin and externally to a cylindrical central portion (3; 53) of a housing (4; 54) which has tubular free ends (5, 5'; 55, 55') on both sides of the central portion (3; 53), the housing (4; 54) being reduced to a smaller tube diameter in its finished state and the tubular ends (5, 5'; 55, 55') being swaged inwards, characterised in that in the initial condition of the rubber/metal component (124; 51, 52, 54) the rubber body (1, 51) has on both sides of the central portion (3; 53) radially rebated regions (6, 6'; 56, 56') with free surfaces, and, adjacent to these regions (6, 6'; 56, 56'), frusto-conical metallic end pieces (7, 7'; 57, 57') overlain by the tubular ends (5, 5'; 55, 55') are bonded to the rubber body (1; 51), the end pieces being of smaller external diameter (8, 8') than the inside diameter of the tubular ends (5, 5'; 55, 55'), and in the finished condition the swaged-down tubular ends (5, 5'; 55, 55') secure the end pieces (7, 7'; 57, 57') to the housing (4; 54) in a manner preventing relative rotation, the housing (4; 54) together with the tubular ends (5, 5'; 55, 55') being reduced in diameter to an extent such that the tubular ends (5, 5'; 55, 55') correspond, in their inside diameter, to the outside diameter of the end pieces (7, 7'; 57, 57').

2. Flexible joint according to Claim 1, characterised in that the end pieces (7, 7') are provided at their outside diameter (8, 8') with notches (10, 10') in which the swaged-down tubular ends (5, 5') partially engage in the finished condition.

3. Flexible joint according to Claim 2, characterised in that notches (11) in the rubber body (1) extending in the axial direction of the middle portion (3) join up with the notches (10) in the end pieces (7).

0 007 430

Fig. 1

Fig. 2

Fig. 3

Fig. 4

5